# EUROPÄISCHE PATENTANMELDUNG

(11) **EP 1 889 714 A1**
(43) Veröffentlichungstag der Anmeldung: **20.02.2008**
(21) Anmeldenummer: 07015241.8
(22) Anmeldetag: 03.08.2007
(51) Int. Cl.: B32B 7/02, F16L 9/12

(54) **Mehrschichtiges Rohr**

(30) Priorität: 16.08.2006 DE 202006012609 U
(71) Anmelder: REHAU AG + Co, 95111 Rehau (DE)
(72) Erfinder: Stadthalter, Peter, 96152 Burghaslach (DE); Liebel, Volker, 91058 Erlangen (DE)

(57) **Zusammenfassung**

Das Rohr gemäß der vorliegenden Erfindung aus zumindest zwei koaxialen, untrennbar miteinander verbundenen Schichten, die thermoplastische Polyolefine gleicher Art enthalten, jedoch unterschiedliche Eigenschaften aufweisen, zeichnet sich dadurch aus, dass die Wanddicke der äußeren dieser beiden Schichten mindestens 50 % der gesamten Wanddicke des Rohres beträgt, dass das Material der äußeren der beiden Schichten einen FNCT-Wert (Full Notched Creep Test) von 750 bis 3000 h und das Material der inneren der beiden Schichten einen FNCT-Wert von mindestens 3000 h, jedoch weniger als das Vierfache des FNCT-Wertes des Materials der äußeren der beiden Schichten, aufweist.

## Beschreibung

Die Erfindung betrifft Rohre insbesondere mehrschichtige Rohre gemäß dem Oberbegriff des Anspruches 1, aus zumindest zwei koaxialen, untrennbar miteinander verbundenen Schichten, die thermoplastische Polyolefine gleicher Art enthalten, jedoch unterschiedliche Eigenschaften aufweisen.

Bekannt sind bereits verschiedene mehrschichtige Rohre, die gegenüber einschichtigen Rohren gewisse Vorteile aufweisen.

Aus der EP 0 869 304 B1 sind mehrschichtige Rohre bekannt, die aus einem Grundrohr aus einem Polyethylen PE100 und einer Außenschicht aus vernetztem Polyethylen (PE-X) bestehen.
Diese Rohre sollen auf ökonomische Weise eine besondere Widerstandsfähigkeit gegen äußere mechanische Belastungen aufweisen. Durch die Vernetzung des Materials der Au-βenschicht soll die Kerbempfindlichkeit herabgesetzt werden, um auf diese Weise die Verschleißfestigkeit zu erhöhen und dadurch die Eignung für bspw. die grabenlose Verlegetechnik zu verbessern. Die dünne und damit kostenreduzierte Außenschicht aus PE-X soll auch für erheblich verbessertes Abriebverhalten und höhere Punktlastbeständigkeiten sorgen, wodurch grabenlose Verlegetechniken und sandbettfreie Verlegungen mit der damit verbundenen Gefahr von Punktbelastungen ermöglicht werden sollen.

Bei einem weiteren bekannten gattungsgemäßen Rohr besteht die Innenschicht aus einem vernetzten Polyethylen hoher Dichte und die Außenschicht aus einem unvernetzten Polyethylen.
Diese Rohre weisen höchste mechanische Beständigkeit gegenüber äußeren Punktlasten und langsamem Risswachstum auf, sind jedoch nur mittels Elektroschweißmuffen, jedoch nicht mittels Stumpfschweißen verbindbar.

Die DE 200 10 111 U1 beschreibt mehrschichtige Rohre mit insgesamt drei Schichten, bei denen das Grundrohr ebenfalls aus Polyethylen PE100 und sowohl die Innen- als auch die Außenschicht aus einem Polyethylen mit erhöhter Spannungsrissbeständigkeit bestehen - mit der gleichen Zielsetzung wie beim vorbeschriebenen Rohr.
Dieses Rohr ist bei entsprechender Wahl des Innenschichtmaterials beständig gegenüber äußeren Punktlasten, seine Beständigkeit gegenüber dem Wachstum von bei Transport oder Verlegung eingebrachter Kerben ist jedoch geringer, insbesondere wenn die Kerben tiefer sind, als die Außenschicht dick ist.

Die DE 202004006812 U1 beschreibt mehrschichtige Rohre mit mindestens zwei Schichten, bei denen das Grundrohr ebenfalls aus Polyethylen PE100 und die Innenschicht aus einem Polyethylen mit erhöhter Spannungsrissbeständigkeit.bestehen. Diese Rohre sind bei entsprechender Wahl des Innenschichtmaterials sehr beständig gegenüber äußeren. Punktlasten.

Die Erfindung stellt sich die Aufgabe, ein gattungsgemäßes Rohr aufzuzeigen, das gegenüber dem Stand der Technik ein nochmals verbessertes mechanisches Verhalten, insbesondere ein ausgewogenes Verhältnis der Beständigkeit des Rohres gegenüber äußeren Punktlasten sowie äußeren Kerben und Riefen aufweist.

Erfindungsgemäß wird dies durch ein Rohr mit den kennzeichnenden Merkmalen des Anspruchs 1 gelöst.
Vorteilhafte Ausgestaltungen sind in den Unteransprüchen aufgeführt.

Es wird ein mehrschichtiges Rohr vorgeschlagen, bei dem die Wanddicke der äußeren der beiden Schichten mindestens 50% der gesamten Wanddicke des Rohres beträgt, bei dem das Material der äußeren der beiden Schichten einen FNCT- Wert (Full Notched Creep Test) von 750 bis 3000h und das Material der inneren der beiden Schichten einen FNCT-Wert von mindestens 3000h, jedoch weniger als das Vierfache des FNCT- Wertes des Materials der äußeren der beiden Schichten, aufweist.
Die Außenschicht ist bspw. aus einem Polyolefin, welches bereits einen erhöhten FNCT-Wert zwischen 750 und 3000 Stunden aufweist und an deren innerem Umfang eine Innenschicht aus einem Polyolefin angeordnet ist, dessen FNCT- Wert mindestens 3000h, jedoch weniger als das 3-fache des FNCT- Wertes der Außenschicht aufweist, wie z.B. ein Polyethylen PE 80 bzw. PE 100.

Als Ergebnis umfangreicher Untersuchungen wurde festgestellt, dass entgegen der Lehre der EP 0 869 304B1 bei äußeren Punktlasten die Materialeigenschaften der Innenschicht und nicht die der Außenschicht die Punktlastbeständigkeit beeinflussen.
Es ist demnach notwendig und völlig ausreichend, dass nur die Innenschichten der Rohre spannungsrissbeständig ausgeführt sind, um Punktlastsicherheit zu gewährleisten.
Mehr als die Hälfte der Rohrwand kann somit aus kostengünstigerem Material hergestellt werden.
Da die Ergebnisse des sogenannten FNCT (Full Notch Creep Test) sehr gut mit der Spannungsrissbeständigkeit des Materiales des Rohres korrelieren, ist das erfindungsgemäße mehrschichtige Rohr dadurch charakterisiert, dass der FNCT- Wert des Materials der Innenschicht einen Wert von wenigstens 3000 h aufweist.

Besonders spannungsrissbeständig sind mit Hexen copolymerisierte Polyethylene mit bimodaler Molekulargewichtsverteilung. Die erfindungsgemäßen Rohre sind somit bevorzugt mit Innenschichten aus diesen Materialien hergestellt.
Ebenso vorteilhaft für die Innenschichten der erfindungsgemäßen Rohre sind Polyethylene wie zum Beispiel Polyethylen- RT(raised temperature). Aufgrund deren amorpher bzw. kristalliner Strukturen sowie der Seitenketten werden die Bewegungen der PE- Makromoleküle gegeneinander behindert.

In einer vorteilhaften Ausführungsform hat das erfindungsgemäße Rohr einen genormten Außendurchmesser und ein genormtes Verhältnis von Außendurchmesser zu Gesamtwanddicke (SDR) von etwa 10 bis 20.

In einer weiteren vorteilhaften Ausführungsform weist das erfindungsgemäße Rohr eine Gesamtwanddicke von Innenschicht und Außenschicht auf, die zumindest etwa 1 % größer ist, als die Wanddicke eines Standardrohres nach EN 12201.

Da bereits vergleichsweise geringe Wanddicken der Innenschicht ausreichen, um damit ausgestattete mehrschichtige Rohre als sehr gut punktlastbeständig auszurüsten, hat ein solches erfindungsgemäßes Rohr hinsichtlich der Punktlastbeständigkeit praktisch die Eigenschaften eines Rohres, welches vollständig aus einem vernetztem Polyethylen besteht; es kann somit wie diese Rohre für die gesamte Dauer der normgerechten Lebenserwartung einer Punktbelastung ausgesetzt werden, ohne zu versagen, kann also ebenso wie diese kostengünstig ohne Sandbettung verlegt werden.

Ein weiterer Vorteil dieser Ausführungsform besteht in der erhöhten Beständigkeit gegenüber langsamem Risswachstum nach Beschädigung der Außenschicht bei Lagerung, Transport oder bei - insbesondere grabenloser - Verlegung.
Ein Rohr mit einer Außenschicht aus einem Material, das erfindungsgemäß einen FNCT-Wert von über 750 h aufweist, ist gegenüber langsamem Risswachstum erhöht beständig.

Bei dünner Ausbildung der Innenschicht ist es zudem möglich, ein mehrschichtiges erfindungsgemäßes Rohr mit einer Außenschicht, deren Abmessungen einschlägigen Normen wie z.B. der EN 12201 entspricht, mit einer zusätzlichen Innenschicht auszustatten, ohne dass der Innendurchmesser dieses Rohres mehr als unwesentlich verringert ist.

Bei optimaler Prozessführung ist es möglich, mit der Gesamtwanddicke des Rohres weitgehend in der Normtoleranz zu bleiben, wenn die Dickenschwankungen der Außenschicht des Rohres nur wenig über dessen Nennmaß hinausgehen und die Dicke der Innenschicht in etwa der Normtoleranz, d.h. ca. 5 bis 15 % der Normwanddicke entspricht.

Neben diesen technischen Vorteilen hat diese erfindungsgemäße Ausführungsform noch einen weiteren Vorteil; die Zulassung von Druckrohren in verschiedensten Ländern ist trotz internationaler Harmonisierung und Normung immer noch zeit- und kostenaufwendig. Dadurch, dass das erfindungsgemäße Rohr und die bevorzugten Ausführungsformen auf einem an sich genormten Rohr basieren, welches eine zusätzliche Innenschicht aufweist, können die Aufwendungen für die Zulassung von Druckrohren erheblich reduziert werden.

Gegenüber Vollwandrohren aus vernetztem Polyethylen (PE-X) bieten die erfindungsgemäßen Ausführungen neben dem Vorteil der weitaus kostengünstigeren Herstellung noch die Möglichkeit, die Rohre mittels Stumpfschweißung zu verbinden.

Bei allen erfindungsgemäßen Ausführungsformen kann es nötig sein, zwischen den vorgenannten Rohrschichten Haftvermittlerschichten einzubringen.

Auch eine zusätzliche optische Gestaltung der Oberfläche, gehört zum Umfang der Erfindung, ebenso wie Rohre, die am äußeren Umfang Farbstreifen oder eine Diffusionssperre aufweisen.

In einer besonderen Ausführungsform enthält mindestens eine der Schichten ein weiteres Polymer, bevorzugt ein Polyamid.

Bei einer weiteren erfindungsgemäßen Ausgestaltung der Rohre ist die Innenschicht und /oder die Außenschicht antistatisch bzw. elektrisch leitfähig ausgerüstet.
Dies ist insbesondere bei Rohren, die für den Transport von Schüttgütern vorgesehen sind, vorteilhaft, um einen störungsfreien Transport zu ermöglichen. Dazu genügt in der Regel die antistatische Ausrüstung der Schichten des Rohres mit einem Oberflächenwiderstand von höchstens 10⁻¹⁰ Ohm/cm.

Um den Aufbau elektrostatischer Felder, die z.B. Staubexplosionen auslösen können, zu verhindern, ist eine elektrisch leitfähige Einstellung der Schichten des Rohres mit einem Oberflächenwiderstand von höchstens 10⁻⁶ Ohm/cm erforderlich.

Bei einer weiteren erfindungsgemäßen Ausgestaltung der Rohre ist die Innenschicht und /oder die Außenschicht durch anorganische Zuschlagsstoffe erhöht abriebbeständig.

Hinsichtlich der Durchführung des Full Notch Creep Tests wird auf den Aufsatz von S.H. Beech, S.J. Palmer und R.W. Burbidge mit dem Titel "Accelerated Laboratory Tests to Predict the Resistance to Slow Crack Growth of High Performance Polyethylene Pipe Resins" 1997, International Plastic Pipe Symposium Seite 205 ff verwiesen.

Weiterhin wird auf den Aufsatz von M. Fleissner verwiesen, mit dem Titel "Experience With a Full Notch Creep Test in Determining the Stress Crack Performance of Polyethylenes" in Polymer Engineering and Science, Februar 1998, Vol. 38, Nr. 2.

Basierend auf den beschriebenen Testbedingungen beträgt bei einem ersten Ausführungsbeispiel bei 80°C, 4,0 MPa und bei Anwesenheit von 2% Netzmittel Arkopal der FNCT-Wert des Materials für die Außenschicht des erfindungsgemäßen Rohres aus. Polyethylen PE100 gemäß EN 12201 mit einem Außendurchmesser von 110 + 0,6 mm sowie einer Wanddicke von 10,0 + 0,3 mm etwa 200 bis 750 h und der FNCT- Wert des Materials der Innenschicht des erfindungsgemäßen Rohres aus einem Polyethylen mit einer Wanddicke von etwa 1,5 mm etwa 3.000 h.

In weiteren vorteilhaften Ausführungsform weist dieses mehrschichtige Rohr eine Innenschicht aus einem Polyethylen mit einer Wanddicke von etwa 0,7 mm auf, mit einem FNCT-Wert von etwa 6.000 h, bei 80°C, 4,0 MPa und bei Anwesenheit von 2% Netzmittel Arkopal.

Diese erfindungsgemäßen mehrschichtigen Rohre erlauben aufgrund ihrer Beständigkeit gegenüber Punktlasten die Verlegung in Aushubmaterial ohne Sandbettung, ohne innerhalb der normgerechten Lebenserwartung aufgrund von Spannungsrissen zu versagen.

Zusätzlich weisen diese erfindungsgemäßen mehrschichtigen Rohre erhöhte Widerstandsfähigkeit gegenüber langsamem Risswachstum von an der Außenschicht entstandenen Riefen bzw. Kerben aus.

## Patentansprüche

1. Rohr aus zumindest zwei koaxialen, untrennbar miteinander verbundenen Schichten, die thermoplastische Polyolefine gleicher Art enthalten, jedoch unterschiedliche Eigenschaften aufweisen, **dadurch gekennzeichnet, dass** die Wanddicke der äußeren dieser beiden Schichten mindestens 50% der gesamten Wanddicke des Rohres beträgt, dass das Material der äußeren der beiden Schichten einen FNCT- Wert (Full Notched Creep Test) von 750 bis 3000h und das Material der inneren der beiden Schichten einen FNCT- Wert von mindestens 3000h, jedoch weniger als das Vierfache des FNCT- Wertes des Materials der äußeren der beiden Schichten, aufweist.

2. Rohr nach Anspruch 1, **dadurch gekennzeichnet, dass** das Material der äußeren der beiden Schichten einen FNCT- Wert (Full Notched Creep Test) von 1000 bis 3000h und das Material der inneren der beiden Schichten einen FNCT- Wert von mindestens 3000h, jedoch weniger als das Dreifache des FNCT- Wertes des Materials der äußeren der beiden Schichten, aufweist.

3. Rohr nach Anspruch 1 oder 2, **dadurch gekennzeichnet, dass** sich an die äußere der beiden Schichten wenigstens eine weitere Schicht anschließt.

4. Rohr nach Anspruch 3, **dadurch gekennzeichnet, dass** das Material der wenigstens einen, sich an die äußere der beiden Schichten anschließende Schicht, einen FNCT-Wert von mindestens 3000h, jedoch weniger als das Dreifache des FNCT- Wertes des Materials der äußeren der beiden inneren Schichten, aufweist.

5. Rohr nach einem der vorhergehenden Ansprüche, **dadurch gekennzeichnet, dass** die sich an die äußere der beiden inneren Schichten anschließende weitere Schicht eine Beschichtung aufweist.

6. Rohr nach Anspruch 5, **dadurch gekennzeichnet, dass** Beschichtung eine Beimischung wenigstens eines die UV- Beständigkeit erhöhenden Zuschlagstoffes aufweist.

7. Rohr nach Anspruch 5, **dadurch gekennzeichnet, dass** Beschichtung eine Beimischung wenigstens eines farbgebenden Zuschlagstoffes aufweist.

8. Rohr nach Anspruch 5, **dadurch gekennzeichnet, dass** Beschichtung eine Beimischung wenigstens eines die Diffusionsbeständigkeit erhöhenden Zuschlagstoffes aufweist.

9. Rohr nach Anspruch 5, **dadurch gekennzeichnet, dass** Beschichtung eine Beimischung wenigstens eines die mechanische Beständigkeit erhöhenden Zuschlagstoffes aufweist.

10. Rohr nach einem der vorhergehenden Ansprüche, **dadurch gekennzeichnet, dass** das Rohr an seiner Außenseite Farbstreifen aufweist.

11. Rohr nach einem der vorhergehenden Ansprüche, **dadurch gekennzeichnet, dass** die wenigstens eine Schicht einen weiteren thermoplastisch verarbeitbaren Bestandteil, insbesondere Polyamid, enthält.

12. Rohr nach einem der vorhergehenden Ansprüche, **dadurch gekennzeichnet, dass** das Material wenigstens einer Schicht des Rohres eine Beimischung wenigstens eines antistatisch wirkenden Zuschlagsstoffes aufweist, wobei der Oberflächenwiderstand der Schicht höchstens 10 -10 Ohm/cm beträgt.

13. Rohr nach einem der vorhergehenden Ansprüche, **dadurch gekennzeichnet, dass** das Material wenigstens einer Schicht des Rohres eine Beimischung wenigstens eines elektrisch leitfähig eingestellten Zuschlagsstoffes aufweist, wobei der Oberflächenwiderstand der Schicht höchstens 10⁻⁶ Ohm/cm beträgt.
